# EUROPÄISCHE PATENTSCHRIFT

(11) **EP 3 754 931 B1**
(45) Veröffentlichungstag und Bekanntmachung des Hinweises auf die Patenterteilung: **05.03.2025**
(21) Anmeldenummer: 19181276.7
(22) Anmeldetag: 19.06.2019
(51) Int. Cl.: H04L 9/40, H04W 12/12

(54) **VERFAHREN ZUR MANIPULATIONSSICHEREN DATENÜBERTRAGUNG**
TAMPER-PROOF DATA TRANSMISSION METHOD
PROCÉDÉ DE TRANSMISSION DE DONNÉES À FIABILITÉ DE MANIPULATION

(43) Veröffentlichungstag der Anmeldung: 23.12.2020
(73) Patentinhaber: SMA Solar Technology AG, 34266 Niestetal (DE)
(72) Erfinder: THIEL, Raimund, 34596 Bad Zwesten (DE); KLEIN, Jens, 37075 Goettingen (DE); GRAF, Tobias, 34246 Vellmar (DE)

(56) Entgegenhaltungen:
- EP-A1- 3 264 718
- US-A1- 2012 066 764
- US-A1- 2018 089 918

## Beschreibung

Die Erfindung betrifft ein Verfahren zur manipulationssicheren Datenübertragung. Die Übertragung erfolgt hierbei an eine Mehrzahl von Empfängern.

Die Sicherheit der Übertragung von Daten zwischen Kommunikationspartnern erhält in Zeiten von Cyberkriminalität zunehmende Bedeutung. Besonders im Bereich der Energieversorgung, und hierbei besonders bei der Kommunikation zwischen Systemen, die Energie in ein Energieversorgungsnetz einspeisen oder aus diesem entnehmen, ist eine manipulationssichere Übertragung von Daten von entscheidender Bedeutung, um einen zuverlässigen Betrieb des Energieversorgungsnetzes sicherstellen zu können. Eine Komponente, die vor Manipulation schützen soll, ist die Verwendung von Verschlüsselungsalgorithmen, die sicherstellt, dass nur berechtigte Teilnehmer Datenpakete erstellen beziehungsweise deren Inhalt entschlüsseln können.

Eine bekannte Variante der Manipulation, die auch bei nicht kompromittierter, verschlüsselter Datenkommunikation anwendbar ist, besteht darin, Datenpakete, die zwischen Kommunikationspartnern ausgetauscht werden, abzufangen und zu einem späteren Zeitpunkt erneut, insbesondere in großer Anzahl wiederholt, zu versenden. Diese Art der Manipulation ist als Replay-Attacke bekannt. Sofern der empfangende Kommunikationspartner nicht erkennt, dass dieses Datenpaket ein Duplikat ist, und dessen Inhalt, insbesondere eine darin enthaltene Anweisung, ernst nimmt beziehungsweise ausführt, kann eine unberechtigte Partei dies zur Manipulation der Kommunikationspartner ausnutzen und beispielsweise im Bereich der Energieversorgung einen Ausfall des Energieversorgungsnetzes bewirken.

Zur Vermeidung dieses Manipulationsweges ist bekannt, verschlüsselte Datenpakete mit einem Abschnitt zu versehen, in dem der Zeitpunkt vermerkt ist, zu dem das Datenpaket erstellt wurde. Durch Abgleich mit einer internen Uhr des Empfängers kann auf diese Weise ermittelt werden, dass es sich um ein veraltetes Datenpaket handelt. Veraltete Datenpakete werden dann einfach ignoriert. Hierbei ist es aber erforderlich, dass alle Kommunikationspartner mit einer ausreichend synchronen Uhr ausgestattet sind. Bei Verlust der Synchronität bricht dieses Verfahren der Datenübertragung zusammen.

So offenbart US 2018/0089918 A1 ein Verfahren, mit dem eine Anfrage zum Öffnen einer Autotür mittels eines Funkschlüssels gegen Replay-Attacken gesichert wird, indem der Empfänger den Empfang einer validen Anfrage mittels einer Antwort quittiert. Falls der Funkschlüssel keine Antwort erhält, wird eine Anfrage zum Synchronisieren eines in der Anfrage zum Öffnen enthaltenen Zählers erzeugt. Weitere Schutzmaßnahmen gegen Replay-Attacken in Netzwerken, die sich innerhalb eines Automobils befinden, sind im Dokument EP 3 264 718 A1 dargelegt.

Das Dokument US 2012/0066764 A1 befasst sich mit einem Verfahren zur Absicherung eines Zigbee-Netzwerks gegen Replay-Attacken, indem ein Zähler in die Datenpakete der Kommunikation integriert und analysiert wird. Im 'Sinne des Zählerstandes veraltete Pakete werden verworfen.

Gerade bei der Verwendung von Broadcast- oder Multicast-Protokollen, bei denen ein Datenpaket gleichzeitig an eine Vielzahl von Empfängern verschickt wird, stellt das Sicherstellen der Synchronität einen erheblichen Zusatzaufwand dar und erfordert eine zentrale Instanz als vertrauenswürdigen Zeitgeber. Außerdem ist eine Manipulation durch den erneuten Versand abgefangener Datenpakete mit dem Ziel der mehrfachen Akzeptanz durch einen Empfänger weiterhin möglich, wenn eine Empfängeruhr oder die zentrale Instanz oder der Übertragungsweg zwischen zentraler Instanz und Empfänger manipulierbar ist. Bei Ausfall oder Unerreichbarkeit der zentralen Instanz kann die Datenkommunikation auch teilweise oder vollständig zusammenbrechen.

Es ist somit Aufgabe dieser Erfindung, eine Datenkommunikation, bei der ein Datenpaket an viele Empfänger gerichtet ist, manipulationssicher gegen einen erneuten Versand von Datenpaketen zu einem späteren Zeitpunkt zu machen, ohne dass eine Synchronisierung über eine zentrale Instanz erforderlich ist.

Diese Aufgabe wird gelöst durch ein Verfahren mit den Merkmalen des unabhängigen Anspruchs 1. Bevorzugte Ausführungsformen der Erfindung sind in den abhängigen Ansprüchen beschrieben.

Ein erfindungsgemäßes Verfahren zur manipulationssicheren Datenübertragung zwischen einer Mehrzahl von ein Synchronisationsmittel aufweisenden Kommunikationspartnern umfasst ein Versenden von verschlüsselten Datenpaketen durch einen der Kommunikationspartner als Sender mittels Broadcast/Multicast-Protokollen zu den übrigen Kommunikationspartnern als Empfänger, wobei jedes Datenpaket einen Authentifizierungsabschnitt, einen Informationsabschnitt und ein Abbild des Synchronisierungsmittels des Senders aufweist. Beim Empfangen, Entschlüsseln und Authentifizieren des Datenpakets durch die Empfänger wird unter Verwendung des Authentifizierungsabschnitts und des Abbilds des Synchronisierungsmittels unterschieden zwischen einem ersten Fall, in dem eine Authentifizierung - unabhängig vom Abbilds des Synchronisierungsmittels - nicht erfolgreich ist, einem zweiten Fall, in dem eine Authentifizierung erfolgreich ist, und in dem ein identisches Datenpaket, zumindest in dem Sinne identisch, dass beide Datenpakete ein gleiches Abbild des Synchronisierungsmittels aufweisen, bereits zu einem früheren Zeitpunkt empfangen wurde, einem dritten Fall, in dem eine Authentifizierung erfolgreich ist, und das Abbild des Synchronisierungsmittels eine vorgegebene Synchronität mit dem Synchronisationsmittel des jeweiligen Empfängers aufweist, und einem vierten Fall, in dem eine Authentifizierung erfolgreich ist, und das Abbild des Synchronisierungsmittels keine vorgegebene Synchronität mit dem Synchronisationsmittel des jeweiligen Empfängers aufweist. Ein Bearbeiten des Datenpakets erfolgt im Empfänger in Abhängigkeit des unterschiedenen Falls, wobei nur im dritten Fall der Informationsabschnitt übernommen wird, und im vierten Fall der Empfänger zumindest verschlüsselt an den Sender, und mittels der Broadcast/Multicast-Protokolle zu einer Vielzahl der übrigen Kommunikationspartner als Empfänger, ein Antwortpaket schickt, das einen Authentifizierungsabschnitt und eine Aufforderung zur Synchronisierung des Synchronisationsmittels unter Verwendung eines Abbildes des Synchronisierungsmittels des Empfängers enthält, wobei die Mehrzahl von Kommunikationspartnern die Aufforderung nach erfolgreicher Entschlüsselung und Prüfung befolgt.

Im ersten Fall wird das Datenpaket vom Empfänger verworfen. Dadurch wird ein Angriff durch einen nicht autorisierten Sender abgesichert, der ein selbst erstelltes Datenpaket an die Empfänger zu verschicken versucht.

Der zweite Fall sichert einen Angriff durch zeitnahes erneutes Versenden eines abgefangenen Datenpakets ab, so dass sichergestellt ist, dass ein Datenpaket von jedem Empfänger nur maximal einmal akzeptiert wird. Auch in dem Fall, dass aufgrund der Eigenheiten des Broadcast/Multicast-Protokolls ein Datenpaket über unterschiedliche Wege mehrfach einem Empfänger zugestellt wird, kann hierdurch sichergestellt werden, dass dieses Datenpaket nur einmal akzeptiert wird. Um diesem Fall erkennen zu können, kann der Empfänger eine Identifikationsinformation, beispielsweise einen Hashwert, der bereits akzeptierten Datenpakete speichern und diese mit einer Identifikationsinformation eines neu empfangenen und zu prüfenden Datenpakets abgleichen. Die gespeicherten Identifikationsinformationen können verworfen werden, wenn sichergestellt ist, dass bei einem erneuten Empfang eines entsprechenden Datenpakets keine vorgegebene Synchronität mit dem Synchronisationsmittel des jeweiligen Empfängers mehr festgestellt werden würde. Hierzu kann innerhalb der Identifikationsinformation auch das im Datenpaket enthaltene Abbild des Synchronisierungsmittels gespeichert werden und die gespeicherte Identifikationsinformation dann verworfen werden, wenn eine vorgegebene Synchronität dieses gespeicherten Abbilds mit dem dann aktuellen Synchronisationsmittel des jeweiligen Empfängers nicht mehr gegeben ist. Auf diese Weise muss nur eine begrenzte Anzahl von Identifikationsinformationen zur Prüfung des zweiten Falls vorgehalten werden.

Der vierte Fall sichert einen Angriff durch ein späteres erneutes Versenden eines abgefangenen Datenpakets ab, bei dem die Identifikationsinformationen beziehungsweise Datensätze beim Empfänger bereits wieder gelöscht worden sind. Gleichzeitig führt die erfindungsgemäße Reaktion auf den vierten Fall durch den Versand des Antwortpakets dazu, dass eine entstandene Asynchronität zwischen den Synchronisierungsmitteln der Kommunikationspartner erkannt wird, und Maßnahmen zur Wiederherstellung der Synchronität ergriffen werden. Daher ist es vorteilhaft, wenn die Kommunikationspartner bei Erhalt des Antwortpakets ihr Synchronisationsmittel auf das enthaltene Abbild des Synchronisationsmittels aktualisieren. Die Aktualisierung kann von einem Ergebnis eines Vergleichs zwischen dem aktuellen Stand des eigenen Synchronisationsmittels zu dem im Antwortpaket enthaltenen Abbild des Synchronisationsmittels abhängig gemacht werden, zum Beispiel um eine Aktualisierung auf einen älteren Stand zu verhindern.

Auch die Situation, dass ein neuer, autorisierter Kommunikationspartner in die Broadcast/Multicast-Kommunikation aufgenommen werden soll, der anfänglich noch nicht synchronisiert ist, wird mittels des vierten Fall zur Herstellung der Synchronität genutzt, indem der neue, noch nicht synchronisierte Kommunikationspartner beim ersten Versuch, ein Datenpaket zu versenden, bei den Empfängern den Versand eines Antwortpakets verursacht, mit dessen Hilfe er ein Abbild eines ausreichend synchronen Synchronisationsmittel erhält und sich synchronisieren kann.

Nur im dritten Fall wird das Datenpaket akzeptiert und der Informationsabschnitt übernommen.

Der Authentifizierungsabschnitt kann eine Identifikation des Senders enthalten oder auch nur ein Abschnitt sein, über den eine ordnungsgemäße Verschlüsselung des Datenpakets erkannt werden kann, der Sender also im Besitz eines zugelassenen Schlüssels war. Andere Authentifizierungsmittel sind ebenfalls denkbar.

In einer vorteilhaften Ausführung kann das Synchronisationsmittel einen Zähler aufweisen. In diesem Fall kann das Abbild ein Zählerstand sein. Allgemein wird unter einem Abbild eine Dokumentation eines Zustandes des Synchronisationsmittels zu einem gegebenen Zeitpunkt verstanden. Eine Prüfung auf Synchronität von Synchronisationsmitteln umfasst in diesem Fall einen Vergleich der Zählerstände. Der Zählerstand kann dabei beim Versenden eines verschlüsselten Datenpakets und/oder in vorgegebenen Zeitabständen inkrementiert werden. Vorteilhafterweise inkrementieren auch die Empfänger bei der Übernahme des Informationsabschnitt eines Datenpakets zumindest im dritten Fall ihr Synchronisierungsmittel, so dass Sender und Empfänger bei erfolgreicher Kommunikation synchron bleiben.

In einer Ausführungsform der Erfindung weist der Informationsabschnitt einen Befehl auf, der von dem jeweiligen Empfänger bei der Übernahme des Informationsabschnitts ausgeführt wird. Alternativ oder ergänzend weist der Informationsabschnitt einen Konfigurationsparameter auf, mit dem der jeweilige Empfänger bei der Übernahme des Informationsabschnitts eine Betriebskonfiguration ändert. In Energieerzeugungsanlagen kann der Informationsabschnitt beispielsweise als Befehl eine einzuspeisende absolute oder relative Wirk- oder Blindleistung, eine vorzuhaltende Leistungsreserve oder eine Information über einen Betriebsmodus enthalten.

Im Folgenden wird die Erfindung näher mithilfe von Figuren beschrieben, von denen
- Fig. 1: einen unmanipulierten Ablauf von Kommunikationswegen gemäß dem erfindungsgemäßen Verfahren, und
- Fig. 2: einen Ablauf von Kommunikationswegen gemäß dem erfindungsgemäßen Verfahren im Rahmen eines Manipulationsversuchs durch erneutes Übertragen eines abgefangenen Datenpakets zeigen.

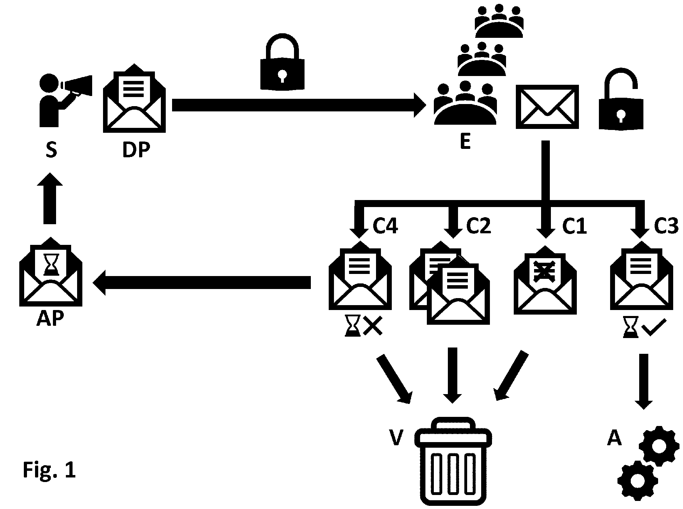

In Fig. 1 ist ein Ablauf von Kommunikationswegen zwischen einem Sender S und einer Vielzahl von Empfängern E über ein Broadcast/Multicast-Protokoll dargestellt. Der Sender S erzeugt ein Datenpaket DP, verschlüsselt es und schickt es verschlüsselt an die Empfänger E. Das Datenpaket DP weist zumindest einen Authentifizierungsabschnitt, einen Informationsabschnitt und ein Abbild des Synchronisierungsmittels des Senders S auf. Weitere Inhalte sind denkbar. Der Informationsabschnitt kann beispielsweise Daten, Parameter, ausführbaren Code oder Anweisungen aufweisen, die zur Ausführung beim Empfänger E vorgesehen sind. Der Authentifizierungsabschnitt enthält Informationen, anhand derer ein Empfänger E die Berechtigung des Senders S zur Kommunikation über das Datenpaket DP prüfen kann. Im einfachsten Fall umfasst der Authentifizierungsabschnitt Informationen, anhand derer die erfolgreiche Entschlüsselung des Datenpakets DP geprüft werden kann. Es können aber auch Informationen, die die Identität oder eine Adresse, unter der der Sender S kontaktiert werden kann, enthalten sein.

Nach Empfang entschlüsseln die Empfänger E das erhaltene Datenpaket DP und prüfen es, wobei sie mindestens zwischen vier unterschiedlichen Fällen C1 bis C4 unterscheiden.

Im ersten Fall C1 stellte Empfänger E fest, dass der Inhalt des entschlüsselten Datenpakets DP nicht valide ist oder eine Entschlüsselung nicht möglich ist. Ein nicht valider Inhalt kann ein Inhalt sein, der sich nicht an ein vereinbartes Format hält, oder ein Inhalt, der einen Authentifizierungsabschnitt mit einem nicht autorisierten Sender S aufweist. In diesem Fall wird das Datenpaket DP verworfen (Mülleimer V).

Im zweiten Fall C2 stellte Empfänger E fest, dass er ein identisches Datenpaket DP bereits erhalten hat. Hierzu kann der Empfänger E das empfangene Datenpaket DP mit allen Datenpaketen vergleichen, die er zumindest innerhalb eines Zeitraumes empfangen hat, in dem deren Empfangszeitpunkte eine vorgegebene Synchronität mit dem aktuellen Stand des Synchronisationsmittel des Empfängers E aufweist. Anstelle des gesamten Datenpakets DP kann der Empfänger E auch nur einen Identifikationsstempel, beispielsweise einen Hashwert, bestimmen und mit dem Stand des Synchronisationsmittels zum Empfangszeitpunkt speichern. Die Prüfung auf das Vorliegen des zweiten Falls C2 kann aus Gründen der Effizienz auch vor der Entschlüsselung des Datenpakets DP stattfinden. Auf diese Weise ist es möglich, auf häufiges Verschicken eines Datenpakets innerhalb eines kurzen Zeitraums, beispielsweise im Rahmen einer DoS- (Denial of Service) Attacke, angemessen zu reagieren. Eine mehrfache Zustellung eines Datenpakets ist aber auch im Rahmen einer manipulationsfreien Übertragung über das Broadcast/Multicast-Protokoll möglich und nicht notwendigerweise ein Zeichen einer Manipulation.

Bei der Prüfung, ob der dritte Fall C3 oder vierte Fall C4 vorliegt, wird zunächst das entschlüsselte Datenpaket DP authentifiziert. Nach erfolgreicher Authentifizierung wird dem Datenpaket DP das Abbild des Synchronisierungsmittels entnommen und mit dem aktuellen Stand des Synchronisierungsmittels des Empfängers E verglichen. Wenn festgestellt wird, dass eine ausreichende Synchronität beider Synchronisierungsmittel vorliegt, wird auf den dritten Fall C3 erkannt, andernfalls auf den vierten Fall C4. Eine Synchronität kann beispielsweise im Fall eines einfachen Zählers als Synchronisierungsmittel durch Differenzbildung ermittelt werden. Wenn die Differenz unter einem vorgegebenen Maximalwert verbleibt, wird eine ausreichende Synchronität festgestellt. Andere Wege der Synchronitätsbestimmung, insbesondere auch bei einem Einsatz anderer Synchronisierungsmittel, sind dem Fachmann bekannt und sollen vom Schutzbereich dieses Schutzrechts mit umfasst werden.

Nur wenn der dritte Fall C3 ermittelt wird, wird der Informationsabschnitt übernommen und geeignet ausgewertet, also die enthaltenen Informationen bestimmungsgemäß verwendet.

Im vierten Fall wird einerseits das Datenpaket DP wie auch im ersten und zweiten Fall verworfen (Mülleimer V). Zusätzlich wird im vierten Fall durch den Empfänger E ein Antwortpaket AP erzeugt, das einen Authentifizierungsabschnitt und eine Aufforderung zur Synchronisierung des Synchronisierungsmittels unter Verwendung eines Abbildes des Synchronisierungsmittels des Empfängers E enthält. Dieses Antwortpaket AP wird vom Empfänger E verschlüsselt zumindest an den ursprünglichen Sender S zurückgesandt. Dieses Antwortpaket AP kann aber auch über das Broadcast/Multicast-Protokoll an eine Vielzahl von Kommunikationspartnern verschickt werden, um eine Möglichkeit zu eröffnen, dass alle diese Kommunikationspartner ihre Synchronisierungsmittel bei Bedarf geeignet aktualisieren können.

Die Reihenfolge, in der die Fälle geprüft werden, ist unerheblich, wobei sich empfiehlt, den Test auf den zweiten Fall frühzeitig, idealerweise vor einer Entschlüsselung des Datenpakets DP, durchzuführen, um Rechenkapazität im Falle einer wiederholten Replay-Attacke zu sparen.

Die Auswertung des Antwortpakets AP beim Kommunikationspartner kann auf die gleiche Weise erfolgen wie die vorstehend beschriebene Auswertung des Datenpakets DP. Nach erfolgreicher Entschlüsselung und Prüfung befolgen die Kommunikationspartner die enthaltene Aufforderung zur Synchronisierung des Synchronisierungsmittels unter Verwendung eines Abbildes des Synchronisierungsmittels des Empfängers E, gegebenenfalls unter der Voraussetzung, dass das enthaltene Abbild aktueller als das eigene Synchronisationsmittel ist.

Durch den Versand eines Antwortpakets AP im vierten Fall kann auf einfachem Wege sichergestellt werden, dass eine verloren gegangene Synchronität unter den Kommunikationspartnern wiederhergestellt wird, beziehungsweise dass ein neu hinzukommender Kommunikationspartner auf einfachem Wege mit den anderen Kommunikationspartnern synchronisiert werden kann. Dies erfordert keine zentrale Instanz, die beispielsweise eine universelle Zeit vorgibt, mit der Uhren der Kommunikationspartner synchronisiert werden.

Solange sichergestellt werden kann, dass die verwendete Verschlüsselung nicht kompromittiert wurde, ist es nicht autorisierten Kommunikationspartnern weder möglich, die Inhalte der verschickten Datenpakete zu analysieren, noch deren Inhalt zu verändern und veränderte Datenpakete zu den Kommunikationspartnern zu senden, ohne dass diese die Veränderung leicht erkennen können und diese Datenpakete verwerfen.

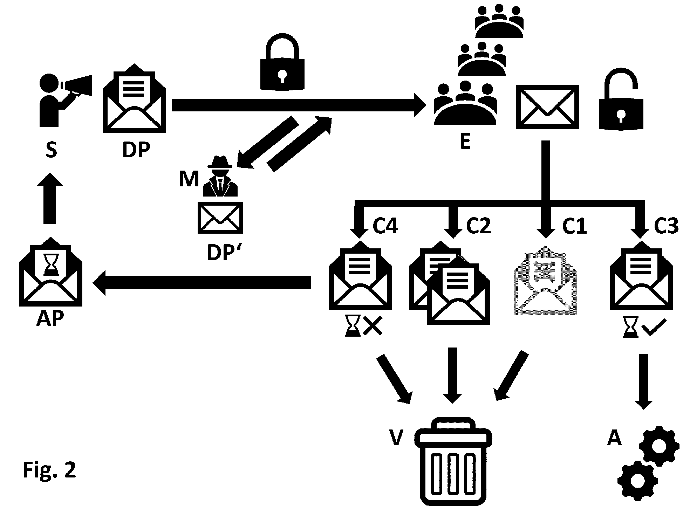

Ein Ablauf eines Manipulationsversuch der Kommunikation unter den Kommunikationspartnern ist schematisch in Fig. 2 dargestellt. Hier greift ein Mann in der Mitte M ein vom Sender S es erzeugtes Datenpaket DP ab und schickt zu einem späteren Zeitpunkt eine Kopie DP' dieses abgefangenen Datenpakets DP erneut an einen oder mehrere Empfänger E. Dieses später gesendete Datenpaket DP' wird von den Empfängern in der gleichen Art und Weise ausgewertet wie das ursprüngliche Datenpaket DP.

Für den Fall, dass das ursprüngliche Datenpaket DP den oder die Empfänger E bereits ordnungsgemäß erreicht hat, wird das später gesendete Datenpaket DP' in jedem Fall verworfen, entweder deshalb, weil es zeitnah nach dem ursprünglichen Datenpaket DP den Empfänger E erreicht und daher gemäß des zweiten Falls C2 als Duplikat eines bereits erhaltenen Datenpakets DP behandelt wird, oder deshalb, weil aufgrund eines deutlich späteren Empfangszeitpunkts das enthaltene Synchronisierungsmittel nicht mehr eine ausreichende Synchronität zum Synchronisierungsmittel des Empfängers E aufweist, und daher gemäß des vierten Falls C4 verworfen wird.

Im Fall, dass das ursprüngliche Datenpaket DP den Empfänger E gar nicht oder noch nicht erreicht hat, kann das abgefangene Datenpaket DP', ein enthaltenes hinreichend synchrones Abbild des Synchronisierungsmittels vorausgesetzt, unbedenklich entsprechend des dritten Falls C3 behandelt werden, da es identisch zum ursprünglichen, in diesem Fall nicht empfangenen Datenpakets DP ist. Andernfalls wird es entsprechend des vierten Falls C4 verworfen.

Es ergibt sich, dass in keinem Fall ein Datenpaket ein zweites Mal übernommen wird, so dass das Kommunikationsverfahren manipulationssicher gegenüber Replay-Attacken ist.

Ein gewünschter Nebeneffekt des im vierten Fall C4 erzeugten Antwortpakets AP ist es, dass insbesondere ein wiederholter Manipulationsversuch auf diese Weise sowohl beim Sender S als auch beim Empfänger E bemerkt werden kann, weil ein solches Antwortpaket erzeugt wird, obwohl möglicherweise gar keine verlorengegangene Synchronität zwischen den Kommunikationspartnern vorliegt.

Um die Kommunikation durch eine wiederholte Replay-Attacke durch häufiges Versenden von Antwortpaketen nicht zu belasten, kann die Anzahl der pro Zeiteinheit von einem Empfänger E im vierten Fall C4 verschickten Antwortpaketen AP, insbesondere zu einem gleichen Kommunikationspartner, begrenzt werden.

## Patentansprüche

1. Verfahren zur manipulationssicheren Datenübertragung zwischen einer Mehrzahl von Kommunikationspartnern, wobei die Kommunikationspartner jeweils ein Synchronisationsmittel aufweisen, umfassend die Schritte:
- Versenden von verschlüsselten Datenpaketen (DP) durch einen der Kommunikationspartner als Sender (S) mittels Broadcast/Multicast-Protokollen zu den übrigen Kommunikationspartnern als Empfänger (E), wobei jedes Datenpaket (DP) einen Authentifizierungsabschnitt, einen Informationsabschnitt und ein Abbild des Synchronisierungsmittels des Senders (S) aufweist,
- Empfangen, Entschlüsseln und Authentifizieren des Datenpakets (DP) durch die Empfänger (E) unter Verwendung des Authentifizierungsabschnitts und des Abbilds des Synchronisierungsmittels, wobei die Empfänger (E) unterscheiden zwischen einem ersten Fall, in dem eine Authentifizierung nicht erfolgreich ist, einem zweiten Fall, in dem eine Authentifizierung erfolgreich ist, und in dem ein identisches Datenpaket bereits zu einem früheren Zeitpunkt empfangen wurde, einem dritten Fall, in dem eine Authentifizierung erfolgreich ist, und das Abbild des Synchronisierungsmittels eine vorgegebene Synchronität mit dem Synchronisationsmittel des jeweiligen Empfängers (E) aufweist, und einem vierten Fall, in dem eine Authentifizierung erfolgreich ist, und das Abbild des Synchronisierungsmittels keine vorgegebene Synchronität mit dem Synchronisationsmittel des jeweiligen Empfängers (E) aufweist,
- Bearbeiten des Datenpakets (DP) im Empfänger (E) in Abhängigkeit des unterschiedenen Falls, wobei nur im dritten Fall der Informationsabschnitt übernommen wird,
und im vierten Fall der Empfänger (E) zumindest verschlüsselt an den Sender (S), und mittels der Broadcast/Multicast-Protokolle zu einer Vielzahl der übrigen Kommunikationspartner als Empfänger, ein Antwortpaket (AP) schickt, das einen Authentifizierungsabschnitt und eine Aufforderung zur Synchronisierung des Synchronisationsmittels unter Verwendung eines Abbildes des Synchronisierungsmittels des Empfängers (E) enthält, wobei die Mehrzahl von Kommunikationspartnern die Aufforderung nach erfolgreicher Entschlüsselung und Prüfung befolgt.

2. Verfahren nach Anspruch 1, wobei das Synchronisationsmittel einen Zähler aufweist, und wobei eine Prüfung auf Synchronität von Synchronisationsmitteln einen Vergleich der Zählerstände umfasst.

3. Verfahren nach Anspruch 2, wobei der Zähler beim Versenden eines verschlüsselten Datenpakets inkrementiert wird.

4. Verfahren nach Anspruch 2 oder 3, wobei der Zähler des Empfängers zumindest im dritten Fall inkrementiert wird.

5. Verfahren nach einem der Ansprüche 2 bis 4, wobei die Zähler der Kommunikationspartner zusätzlich in vorgegebenen Zeitabständen inkrementiert werden.

6. Verfahren nach einem der vorangehenden Ansprüche, wobei der Informationsabschnitt einen Befehl aufweist, der von dem jeweiligen Empfänger (E) bei der Übernahme des Informationsabschnitts ausgeführt wird.

7. Verfahren nach einem der vorangehenden Ansprüche, wobei Informationsabschnitt einen Konfigurationsparameter aufweist, mit dem der jeweilige Empfänger (E) bei der Übernahme des Informationsabschnitts eine Betriebskonfiguration ändert.

8. Verfahren nach einem der vorangehenden Ansprüche, wobei die Kommunikationspartner bei Erhalt des Antwortpakets (AP) ihr Synchronisationsmittel auf das im Antwortpaket (AP) enthaltene Abbild des Synchronisationsmittels aktualisieren.

## Claims

1. Method for tamper-proof data transmission between a plurality of communication partners, the communication partners each having a synchronisation means, comprising the steps of:
- transmitting of encrypted data packets (DP) by one of the communication partners as sender (S) by means of broadcast/multicast protocols to the remaining communication partners as receivers (E), each data packet (DP) comprising an authentication section, an information section and an image of the synchronisation means of the sender (S),
- receiving, decrypting and authenticating the data packet (DP) by the receivers (E) using the authentication section and the image of the synchronisation means, the receivers (E) distinguishing between a first case in which authentication is unsuccessful, a second case in which authentication is successful, and in which an identical data packet has already been received at an earlier time, a third case in which authentication is successful and the image of the synchronisation means has a predetermined synchronicity with the synchronisation means of the respective receiver (E), and a fourth case in which authentication is successful and the image of the synchronisation means has no predetermined synchronicity with the synchronisation means of the respective recipient (E),
- processing the data packet (DP) in the recipient (E) depending on the different case, wherein the information section is only accepted in the third case,
and wherein in the fourth case, the receiver (E) sends a response packet (AP) to the sender (S), at least in encrypted form, by means of the broadcast/multicast protocols to a plurality of the remaining communication partners as receivers, which packet contains an authentication section and a request for synchronisation of the synchronisation means using an image of the synchronisation means of the receiver (E), wherein the plurality of communication partners comply with the request after successful decryption and verification.

2. The method according to claim 1, wherein the synchronisation means comprises a counter, and wherein a check for synchronism of synchronisation means comprises a comparison of the counter readings.

3. The method according to claim 2, wherein the counter is incremented when an encrypted data packet is sent.

4. Method according to claim 2 or 3, wherein the counter of the receiver is incremented at least in the third case.

5. Method according to any of claims 2 to 4, wherein the counters of the communication partners are additionally incremented at predetermined time intervals.

6. Method according to any of the preceding claims, wherein the information section comprises a command which is executed by the respective receiver (E) when the information section is accepted.

7. Method according to any of the preceding claims, wherein the information section comprises a configuration parameter with which the respective receiver (E) changes an operating configuration when the information section is accepted.

8. Method according to any of the preceding claims, wherein the communication partners update their synchronisation means to the image of the synchronisation means contained in the response packet (AP) upon receipt of the response packet (AP).

## Revendications

1. Procédé de transmission de données inviolable entre une pluralité de partenaires de communication, les partenaires de communication présentant chacun un moyen de synchronisation, comprenant les étapes suivantes:
- Envoi de paquets de données cryptés (DP) par l'un des partenaires de communication en tant qu'émetteur (S) au moyen de protocoles de diffusion/multidiffusion vers les autres partenaires de communication en tant que récepteurs (E), chaque paquet de données (DP) comprenant une section d'authentification, une section d'information et une image du moyen de synchronisation de l'émetteur (S),
- réception, décryptage et authentification du paquet de données (DP) par les récepteurs (E) en utilisant la section d'authentification et l'image du moyen de synchronisation, les récepteurs (E) faisant la distinction entre un premier cas dans lequel une authentification n'est pas réussie, un deuxième cas dans lequel une authentification est réussie et dans lequel un paquet de données identique a déjà été reçu à un moment antérieur, un troisième cas dans lequel une authentification est réussie et l'image du moyen de synchronisation présente un synchronisme prédéterminé avec le moyen de synchronisation du récepteur (E) respectif, et un quatrième cas dans lequel une authentification est réussie et l'image du moyen de synchronisation ne présente pas de synchronisme prédéterminé avec le moyen de synchronisation du récepteur (E) respectif,
- traiter le paquet de données (DP) dans le récepteur (E) en fonction du cas distingué, la section d'information n'étant reprise que dans le troisième cas,
et dans le quatrième cas, le récepteur (E) envoie au moins de manière cryptée à l'émetteur (S), et au moyen des protocoles de diffusion/multidiffusion à une pluralité des autres partenaires de communication en tant que récepteurs, un paquet de réponse (AP) contenant une section d'authentification et une demande de synchronisation du moyen de synchronisation en utilisant une image du moyen de synchronisation du récepteur (E), la pluralité de partenaires de communication se conformant à la demande après décryptage et vérification réussis.

2. Procédé selon la revendication 1, dans lequel le moyen de synchronisation comprend un compteur, et dans lequel une vérification de la synchronisation de moyens de synchronisation comprend une comparaison des valeurs de compteur.

3. Procédé selon la revendication 2, dans lequel le compteur est incrémenté lors de l'envoi d'un paquet de données chiffré.

4. Procédé selon la revendication 2 ou 3, dans lequel le compteur du destinataire est incrémenté au moins dans le troisième cas.

5. Procédé selon l'une des revendications 2 à 4, dans lequel les compteurs des partenaires de communication sont en outre incrémentés à des intervalles de temps prédéterminés.

6. Procédé selon l'une des revendications précédentes, dans lequel la section d'information comprend une commande qui est exécutée par le récepteur respectif (E) lors de la prise en charge de la section d'information.

7. Procédé selon l'une des revendications précédentes, dans lequel la section d'information comprend un paramètre de configuration avec lequel le récepteur respectif (E) modifie une configuration de fonctionnement lors de la prise en charge de la section d'information.

8. Procédé selon l'une des revendications précédentes, dans lequel, à la réception du paquet de réponse (AP), les partenaires de communication mettent à jour leurs moyens de synchronisation sur l'image des moyens de synchronisation contenue dans le paquet de réponse (AP).
